(19) Europäisches Patentamt

European Patent Office

Office européen des brevets

(11) **EP 1 694 067 A1**

(12) **EUROPEAN PATENT APPLICATION**
published in accordance with Art. 158(3) EPC

(43) Date of publication:
**23.08.2006 Bulletin 2006/34**

(51) Int Cl.:
*H04N 7/16* (2006.01)    *G06F 12/14* (2006.01)
*G06F 15/00* (2006.01)    *H04L 9/14* (2006.01)

(21) Application number: **04821199.9**

(22) Date of filing: **26.11.2004**

(86) International application number:
**PCT/JP2004/017602**

(87) International publication number:
**WO 2005/071960 (04.08.2005 Gazette 2005/31)**

(84) Designated Contracting States:
**AT BE BG CH CY CZ DE DK EE ES FI FR GB GR
HU IE IS IT LI LU MC NL PL PT RO SE SI SK TR**

(30) Priority: **01.12.2003 JP 2003401383**

(71) Applicant: **Matsushita Electric Industries Co., Ltd.
Kadoma-shi,
Osaka 571-8501 (JP)**

(72) Inventors:
• **JI, Ming
c/o Matsushita El. Ind. Co., Ltd.
Chuo-ku, Osaka-shi, Osaka 540-6319 (JP)**
• **HUANG, Zhongyang
c/o Matsushita El. Ind. Co., Ltd.
Chuo-ku, Osaka-shi, Osaka 540-6319 (JP)**

• **SHEN, Sheng, Mei
c/o Matsushita El. Ind. Co., Ltd.
Chuo-ku, Osaka-shi, Osaka 540-6319 (JP)**
• **LIU, Jing
c/o Matsushita El. Ind. Co., Ltd.
Chuo-ku, Osaka-shi, Osaka 540-6319 (JP)**
• **SENOH, Takanori
c/o Matsushita El. Ind. Co., Ltd.
Chuo-ku, Osaka-shi, Osaka 540-6319 (JP)**

(74) Representative: **Eisenführ, Speiser & Partner
Patentanwälte Rechtsanwälte
Postfach 10 60 78
28060 Bremen (DE)**

(54) **STREAMING SYSTEM**

(57) This streaming system includes a server and a client which transmit and receive a media stream having a layer structure including at least a session layer through a network. The server includes means for incorporating management information for managing the media stream in an SDP of the session layer of the media stream, and means for transmitting the SDP in which the management information is incorporated to the client in the session layer of the media stream. The client includes means for receiving the SDP in which the management information is incorporated from the server, means for extracting the management information from the received SDP, and means for managing the media stream on the basis of the extracted management information.

*Fig.4*

SESSION DESCRIPTION — 4.1

SESSION LEVEL SECTION

v= (protocol version)
o= ...
s= ...
e= ...
c= ...
t= ...

Attribute declaration — 4.3
a=control:*
a=range:ntp=...
a=ipmp-control: [<control-data>] → IPMP Tool List / Rights Container

MEDIA LEVEL SECTION — 4.2

m= video (media name and transport address)
i= ...
b= ...

Attribute declaration — 4.4
a=rtpmtp:...
a=ftmp:...
a=ipmp-d: [<description-data>] → IPMP Descriptor (1)

m= video (media name and transport address)
i= ...
b= ...

Attribute declaration
a=rtpmtp:...
a=ftmp:...
a=ipmp-d: [<description-data>] → IPMP Descriptor (2)

**Description**

TECHNICAL FIELD

The present invention relates to digital right management (DRM) for general streaming contents protection or intellectual property right management and protection (IPMP).

BACKGROUND ART

In recent years, in a media contents distribution industry, assurance of interoperational delivery of video and audio contents through the Internet is popularly promoted. From a viewpoint of standardization, a method of protecting media contents transmitted from a media server to a media client through an IP network and a method of interoperationally reproducing the protected media on the receiver of the client attract attention. Various standard-setting organizations make considerable efforts to provide a countermeasure against this problem.

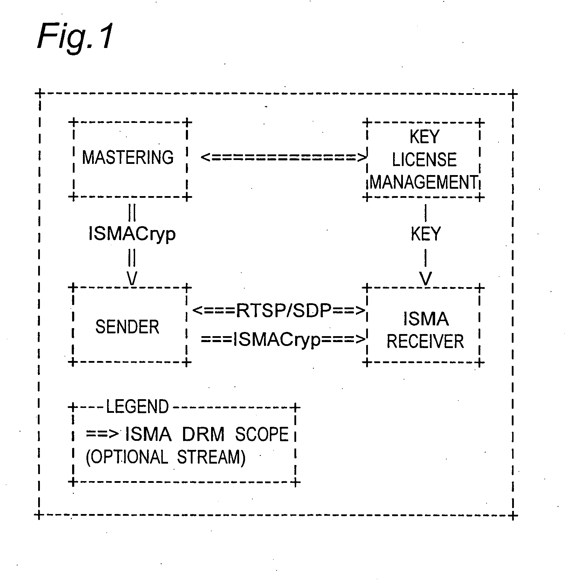

Internet Streaming Media Alliance (ISMA) is one of these organizations. This organization clearly expresses a framework which uses existing open standards and can be used to cause a vender to construct an interoperational video or audio system which can be used in an IP framework and the Internet, so as to serve the needs. The organization also regulates an encoding framework for an ISMA media stream, i.e., ISMACryp. At the present, the organization regulates a default method about encoding of a media stream and certification of a media message in relation to an fmtp announcement of ISMA specifications and ISMACryp parameters. FIG. 1 is an architecture diagram of ISMA Crypt protection to the ISMA framework.

However, such a protection system is considerably inconvenient with respect to the following point. There is not provided an adaptive device which can make it possible to realize different encoding methods for different contents streams or different protecting methods (for example, encoding or watermarking) for the same contents stream. The protecting system does not provide any device which stores right information.

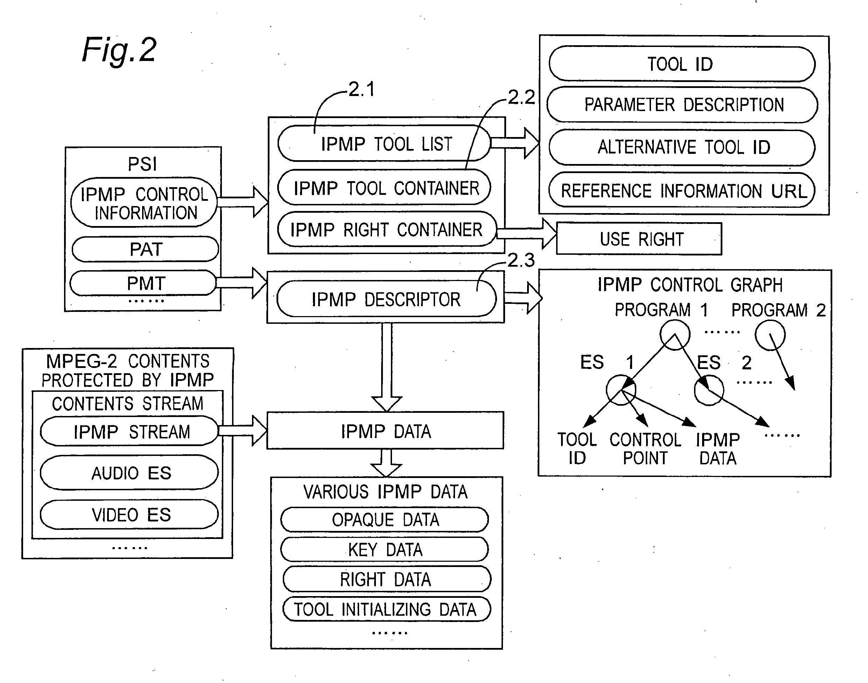

At the same time, an MPEG standard-setting organization make considerable efforts to provide an adaptive and interoperational IPMP framework to protect a media resource. The MPEG develops to standardize an IPMP framework including compliant terminals. All the terminals conform to the same IPMP standards regardless of the type of an IPMP tool to be used, so that contents protected by standardization can be displayed. The IPMP tool is a module which at least one IPMP function such as a certification function, a decoding function, or a watermarking function. In order to realize extended interoperational capabilities, the IPMP standards make it possible to download a tool and read the tool from a remote site to make it possible to adaptively update the tool. The IPMP standards design a terminal to able to select a tool desired by the terminal in accordance with a parameter description. The IPMP terminal forms a combination (which operates like a single tool) of tools obtained by integrating some tools in accordance with some parameter integration. FIG. 2 is a general architecture diagram of an MPEG IPMP protection.

However, an MPEG IPMP framework makes it possible to realize an adaptive protecting scheme, while being regulated in an MPEG-2/4 system which is not always used in multi-media streaming transmission.

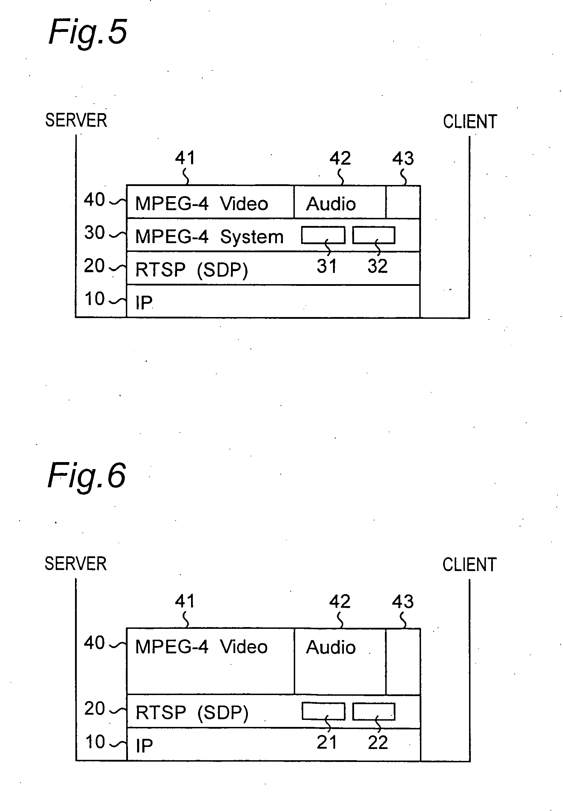

FIG. 5 is a diagram showing a layer structure in conventional MPEG-4 streaming. The conventional streaming has a network layer 10 such as an internet protocol (IP), a session layer 20 such as an RTSP (in particular, a session description protocol (SDP)), a system layer 30 such as an MPEG-4 system, and a contents layer 40 such as MPEG-4 video/audio 41 or 42. In the conventional streaming, IPMP information such as an IPMP tool list 31 or an IPMP descriptor 32 associated with protection of MPEG-4 video/audio contents of a media stream is described in the MPEG-4 system serving as the system layer 30.

DISCLOSURE OF THE INVENTION

The present invention is to solve the following problems.

The MPEG IPMP provides an adaptive protection announcement in an MPEG-2/4 system. FIG. 2 shows an MPEG-2IPMP contents structure, and FIG. 3 shows an MPEG-4IPMP extended contents structure. However, such an adaptive protection announcement is not included in media streaming which does not use the MPEG-2/4 system, e.g., ISMA streaming. For this reason, since IPMP information associated with protection of contents cannot be acquired by an ISMA receiver which cannot use the MPEG-4 system in FIG. 5, contents protected by an IPMP tool cannot be used.

In a current internet region, multimedia streaming transmitted by using an RTP/UDP with RTSP/SDP is increasingly popularized, and an end user can more easily use expensive contents. Regardless of a transmission protocol using in transmission of contents, a session level is described by using a session description protocol (SDP), and various attributes to describe a media level are stored to make easy to use contents.

It is' an object of the present invention to provide protection and management of streaming contents using a session description protocol (SDP) in description of a multimedia session to initiate a multimedia session by, especially, session announcement, session derivation, and another scheme under a multimedia streaming environment which is popularized as described above.

A streaming system according to the present invention is a streaming system including a server for transmitting a multimedia stream having a layer structure including at least a session layer through a network and a client for receiving the media stream from the server through the network.

The server includes:

a storing unit operable to store management information for managing the media stream in a session description protocol (SDP) of a session layer of the media stream; and
a transmitting unit operable to transmit the session description protocol in which the management information is stored to the client by the session layer of the multimedia stream.

The client includes:

a receiving unit operable to receive the session description protocol in which the management information is stored from the server;
an extracting unit operable to extract the management information from the received session description protocol; and
a managing unit operable to manage the media stream on the basis of the extracted management information.

The management information may be an IPMP tool list or an IPMP descriptor associated with an IPMP tool used in protection of the media stream. In this case, the means for managing the media stream of the client specifies the IPMP tool by the extracted IPMP tool list or the extracted IPMP descriptor to make it possible to manage the media stream.

Furthermore, the management information may be right information of the media stream. The right information includes use light information or the like of the media stream.

The management information is stored in a session level attribute or a media level attribute of the SDP. When the management information is stored in the session level attribute, all media streams can be managed. When the management information is stored in the media level attribute, associated media streams can be managed.

In the IPMP descriptor, a tool structure or IPMP data of another type can be stored. The IPMP descriptor is described in the SDP serving as a session layer, so that a client on the receiver is announced that the media stream is managed by the IPMP tool described in the IPMP descriptor. As described above, the range of a media stream to be targeted changes depending on whether the IPMP descriptor is stored in the session level attribute or the media level attribute.

The use right information of the right information may be stored in an IPMP right container. Furthermore, the IPMP right container is described in the SDP. In this manner, the client on the receiver is announced that the media stream is managed by described contracts of use. The IPMP right container is stored in the session level attribute.

Furthermore, the use right information of the right information may be stored in the IPMP right data. The IPMP right data may be stored in the IPMP descriptor as one type of IPMP data. In this manner, it can be shown that the media stream is managed by the described contracts of use.

When the IPMP descriptor is stored in the session level attribute of the SDP, all media streams in a current session are managed by the contracts of use described in the user right information. On the other hand, when the IPMP descriptor is described in the media level attribute of the SDP, an associated media stream is managed by the contacts of use described in the user right information.

In the client, the IPMP tool list is read from the session level attribute of the SDP to check an IPMP tool shown in the IPMP tool list. Thereafter, the client on the receiver checks that all the IPMP tools are present. When all the IPMP tools are not present, the IPMP tool is read from a server or the like through a network, or the reproduction of the media stream is stopped.

In addition, the client reads the IPMP descriptor from the SDP and is announced that the media stream is managed by the IPMP tool described in the IPMP descriptor. Furthermore, the client may use a tool structure data stored in the IPMP descriptor to set or initialize the IPMP tool or may use data of another type stored in the IPMP descriptor to support an IPMP process.

When the IPMP descriptor is read from the session level attribute of the SDP, all media streams in a current session are managed by the IPMP tool described in the IPMP descriptor. On the other hand, when the IPMP descriptor is read from the media level attribute, the associated media stream is managed by the IPMP tool described in the IPMP descriptor.

The client reads an IPMP right container from the session level attribute of the SDP, and reads use right information from the IPMP right container. The client uses the use right information to make it possible to manage all the media streams in the current session.

Furthermore, the client reads an IPMP descriptor from the SDP and reads use right information from the IPMP descriptor. The client can manage a media stream by using the use right information.

When the IPMP descriptor is read from the session level attribute of the SDP, all the media streams in the current session are managed by contracts of use described in the use right information. On the other hand, when the IPMP descriptor is read from the media level attribute of the SDP, an associated media stream is managed by the contracts of use described in the use right information.

The present invention provides means for announcing adaptive IPMP (DRM) protection by using an SDP by obligating right expression information to an actual media stream.

In the present invention, additional SDP attributes of two types are regulated to store adaptive IPMP announcement information. In order to secure that all terminals conforming to the additional SDP attributes cannot avoid copyright protection and a management process, the IPMP-associated attribute is preferably made obligatory.

The digital right information can be normatively stored in the regulated SDP attribute. The right information may be of various types, i.e., MPEG-21, REL (Right Expression Language), ODRL (Open Digital Right Language), and the like.

In the SDP attribute, the protection is announced by using an IPMP tool list and an IPMP descriptor. This means is compatible with the latest MPEG-2/4IPMP extended standards. This also provides an adaptive method of identifying an IPMP protection tool necessary to reproduce streaming contents.

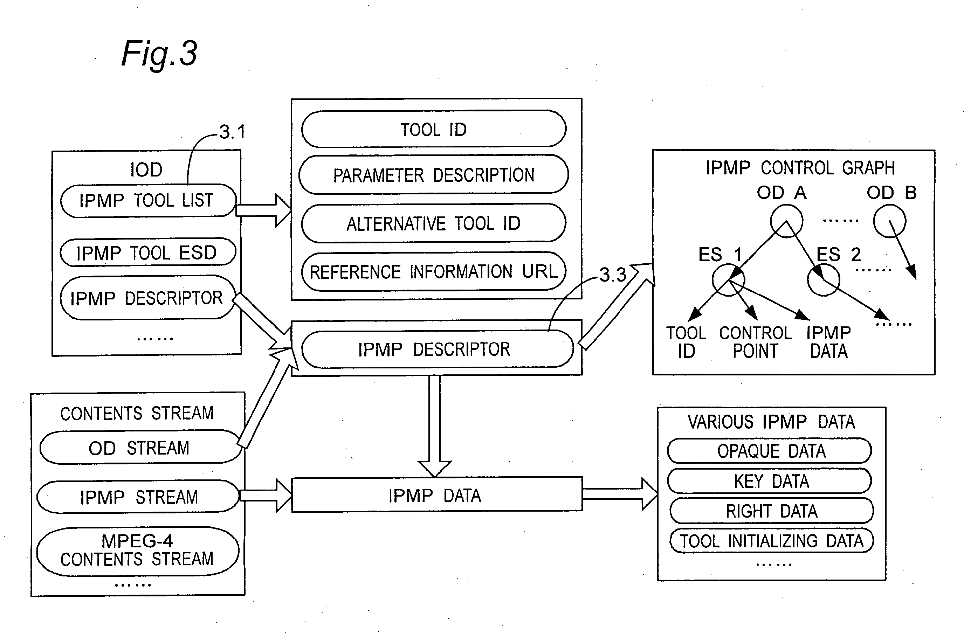

In the streaming server, an IPMP tool list is constituted on the basis of a type of a tool used in protection of a streaming medium. The concept of the tool list is derived from MPEG-2/4 IPMPs shown in FIGS. 2.1 and 3.1. Under the condition in which both the MPEG-2/4 IPMPs are not present, the tool list is stored in an SDP attribute "ipmp-control" regulated at the entire session level.

When the stream in the session is managed by some digital right, for example, when the stream is exactly expressed by a specific right language such as MPEG-21 REL, the server can insert the right information into the IPMP right container. At the same time, the right information is also stored in the "ipmp-control" attribute. In MPEG-2IPMP, the right container is stored in a PSI (program specific information) (2.2). In the SDP, the "ipmp-control" attribute is used in place of the PSI of the MPEG-2 system.

The IPMP descriptor is also constituted on the basis of a tool which protects a specific stream. In the MPEG-2/4 IPMPs, as shown in FIGS. 2.3 and 3.3, the IPMP descriptor can be stored at various places. The IPMP descriptor is buried in the SDP attribute "ipmp-d" regulated at specific media levels or session levels to announce tool protection.

Except for the tool protection announcement, the IPMP descriptor can also store IPMP data derived from IPMP_Data_BaseClass of various types. The IPMP data includes, but are not limited to, tool structure, use right information, and the like.

The SDP can be carried to a receiver by using various transfer protocols such as an RTSP. A client on the receiver analyzes regulated IPMP-associated attributes of two types, i.e., the attributes "ipmp-control" and "ipmp-d".

When an IPMP tool list is detected in the "ipmp-control" attribute, the receiver recognizes that the IPMP protection is performed throughout the session. Before reproducing the media stream in the session, the receiver verifies that all tools registered in the tool list can be used by the terminal. If the tools cannot be used, the receiver acquires a tool from a designated URL.

When digital right information is detected in the IPMP right container of the "ipm-control" attribute or in the IPMP descriptor of the "ipmp-d" attribute at the session level, the receiver can recognize that all media streams in a current session are managed by a designated digital right. In this case, an appropriate right protecting process is preferably performed.

When the IPMP descriptor is detected in an SDP "ipmp-control" attribute at the session level, the receiver can recognize a tool which protects all the streams. During the reproduction of a stream, the receiver can start IPMP tools designated by time and place for all the session streams.

When the IPMP descriptor is detected in the SDP "ipmp-d" attribute at the media level, the receiver can recognize a specific tool which protects a specific stream. The receiver can start IPMP tools designated by time and place for a designated stream.

A tool initializing parameter can be stored in the IPMP descriptor, so that a tool can be set before the tool is actually used. Use right information is also stored in the IPMP descriptor, and unique use rules associated with a specific media stream can be described.

BRIEF DESCRIPTION OF DRAWINGS

The present invention will become readily understood from the following description of preferred embodiments thereof made with reference to the accompanying drawings, in which like parts are designated by like reference numeral and in which:

FIG. 1 is a diagram showing an ISMACryp architecture;

FIG. 2 is a diagram showing an MPEG-2IPMP extended contents structure;

FIG. 3 is a diagram showing an MPEG-4IPMP extended contents structure;

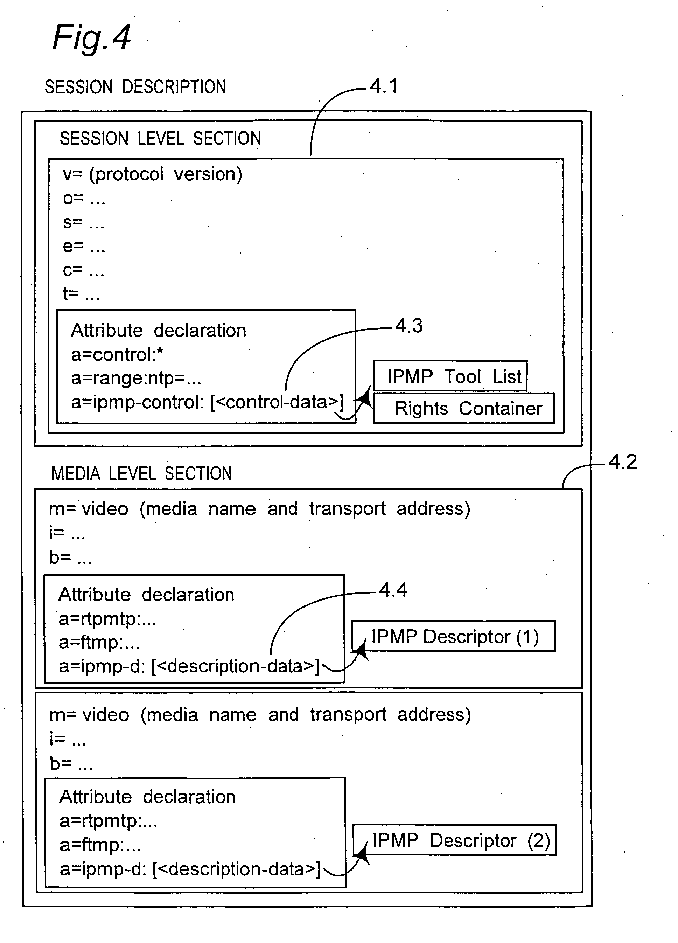

FIG. 4 is a diagram showing an IPMP protection announcement using an SDP attribute;

FIG. 5 is a diagram showing a layer structure of a conventional MPEG-4 stream;

FIG. 6 is a diagram showing a layer structure of an MPEG-4 stream in a media stream transmitting/receiving system according to the present invention;

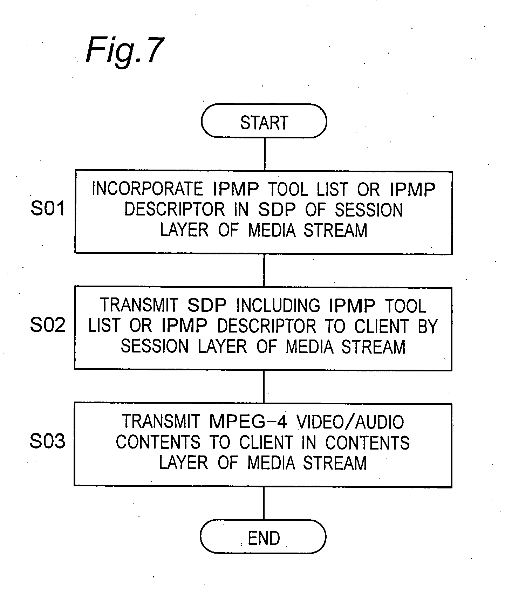

FIG. 7 is a flow chart of a method of storing information associated with an IPMP tool in a session description protocol of a media stream in a server to transmit the information to a client;

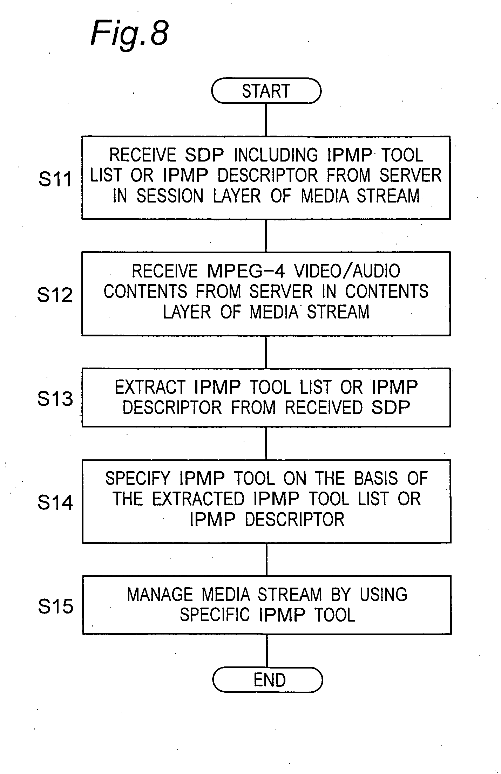

FIG. 8 is a flow chart of a method of causing a client to receive a media stream including a session description protocol in which information associated with an IPMP tool is stored to manage the media stream;

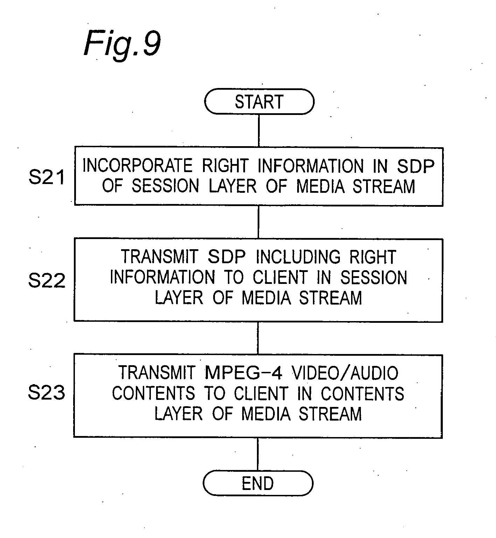

FIG. 9 is a flow chart of a method of storing right information in the session description protocol of a media stream in a server to transmit the right information to a client; and

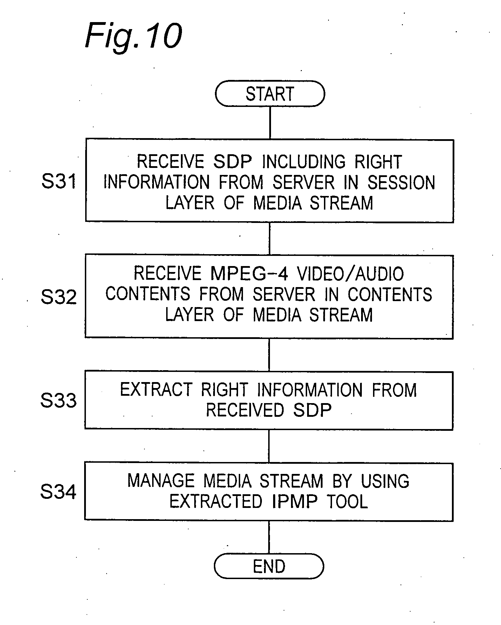

FIG. 10 is a flow chart of a method of causing a client to receive a media stream including a session description protocol in which right information is stored to manage the media stream.

BEST MODE FOR CARRYING OUT THE INVENTION

A media stream transmitting/receiving system, a media stream transmitting method, and a media stream receiving method according to an embodiment of the present invention will be described below with reference to the accompanying drawings.

FIG. 6 is a diagram showing a layer structure of an MPEG-4 streaming in a streaming system according to the embodiment of the present invention. This streaming has a layer structure including at least a session layer. For example, as shown in FIG. 6, the streaming has a layer structure constituted by a network layer 10 such as an internet protocol (IP), a session layer 20 such as an RTSP (in particular, a session description protocol (SDP)), and a contents layer 40 which transmits MPEG-4 video/audio 41 and 42 and other contents 43. In FIG. 6, one session includes one media stream. The system is not limited to this configuration, and one session may include a plurality of media streams. In a streaming in the streaming system according to the present invention, the IPMP information such as the IPMP tool list 21 and the IPMP descriptor 22 associated with protection of MPEG-4 video/audio contents of the media stream is described in a session description protocol (SDP) serving as the session layer 20. Right information such as use right information of contents carried by a media stream may be described in the SDP. The IPMP information and the right information are management information to manage a media stream (contents). More specifically, in the streaming system according to the present invention, the management information such as the IPMP information or the right information is described in the SDP of the session layer 20. For this reason, even though a receiver of a streaming is a client such as an ISMA receiver which does not use an MPEG-4 system, the management information such as the IPMP information or the right information can be extracted from the SDP. The media streams can be managed by using the management information. The management information such as the IPMP information or the right information can be stored in a session level attribute associated with all media streams of the same session or a media level attribute associated with an associated specific media stream.

The streaming system includes a server for transmitting a media stream having a layer structure including at least a session layer through a network and a client for receiving the media stream from the server through the network. The server includes a means for storing management information for managing contents carried by a media stream in a session description protocol (SDP) of the session layer of a streaming, and the means for transmitting the SDP in which the management information is stored to the client by the session layer. The client includes a means for receiving the SDP in which the management information is stored from the server, a means for extracting management information from the received SDP, and means for managing the media stream on the basis of the extracted management information.

FIG. 7 is a flow chart of a method of storing information associated with an IPMP tool in a session description protocol (SDP) of a streaming in a server to transmit the information to a client.

(a) An IPMP tool list 21 or an IPMP descriptor 22 associated with an IPMP tool of contents carried by a media stream are incorporated in the SDP of a session layer 20 of a streaming (S01). An IPMP tool list or IPMP information of the IPMP descriptor can be stored in an SDP session level attribute or an SDP media level attribute. When all media streams in the same session are managed by a common IPMP tool, the IPMP information is stored in the session level attribute. When a specific media stream is managed by a specific IPMP tool, the IPMP information is stored in an associated media level attribute.

(b) An SDP including the IPMP tool list 21 or the IPMP descriptor 22 is transmitted to the client by the session layer 20 of a streaming (S02).

(c) MPEG-4 video/audio contents are transmitted to the client by a contents layer 40 of a streaming (S03).

FIG. 8 is a flow chart of a method of causing the client to receive a streaming including a session description protocol (SDP) in which information associated with an IPMP tool is stored.

(a) The session layer 20 of the streaming receives the IPMP tool list 21 or the IPMP descriptor 22 related to the IPMP tool of the contents carried by a media stream from the server (S11).
(b) The contents layer 40 receives MPEG-4 video/audio contents 41 or 42 from the server (S12).
(c) The IPMP tool list 21 or the IPMP descriptor 22 is extracted from the received SDP (S13).
(d) An IPMP tool is specified on the basis of the extracted IPMP tool list 21 or the extracted IPMP descriptor 22 (S14).
(e) The MPEG-4 video/audio contents 41 or 42 are managed by using the specific IPMP tool (S15).

In this manner, the IPMP information such as the IPMP tool list 21 or the IPMP descriptor 22 associated with protection of the MPEG-4 video/audio contents 41 or 42 is described in the session description protocol (SDP) serving as the session layer 20. Even though a receiver side does not use an MPEG-4 system, the IPMP information such as the IPMP tool list 21 or the IPMP descriptor 22 can be extracted from the SDP. An IPMP tool is specified by using the IPMP information to make it possible to manage contents.

The IPMP information is stored in the session level attribute or the media level attribute of the SDP. When the IPMP information is stored in the session level attribute, all media streams in the same session can be managed. When the IPMP information is stored in the media level attribute, media streams associated with the media level attribute can be managed.

FIG. 9 is a flow chart of method of storing right information in a session description protocol of a streaming in a server to transmit the right information to the client.

(a) Right information such as use right information of contents carried by a media stream is incorporated in the SDP of the session layer 20 of a streaming (S21).
(b) The SDP including the right information is transmitted to the client by the session layer 20 of the streaming (S22).
(c) MPEG-4 video/audio contents are transmitted to the client by the contents layer 40 of the streaming (S23).

FIG. 10 is a flow chart of a method of causing the client to receive a streaming including a session description protocol in which right information is incorporated to manage a media stream.

(a) The session layer 20 receives the SDP including right information such as use right information of contents carried by the media stream from a server (S31).
(b) The contents layer 40 of the streaming receives the MPEG-4 video/audio contents 41 or 42 from the server (S32).
(c) The right information is extracted from the received SDP (S33).
(d) The video/audio contents 41 or 42 are managed by using the extracted IPMP tool (S34).

In this manner, the right information such as the use right information of the MPEG-4 video/audio contents 41 or 42 is described in a session description protocol (SDP) serving as the session layer 20. For this reason, even though the receiver does not use an MPEG-4 system, the right information such as the use right information can be extracted from the SDP. The contents can be managed by using the right information.

The right information is incorporated in the session level attribute or the media level attribute of the SDP. When the right information is incorporated in the session level attribute, all media streams in the same session can be managed. When the right information is incorporated in the media level attribute, media streams associated with the media level attribute can be managed.

A session layer of a streaming in the streaming system and management information described in the session layer will be described below. In the streaming system, management information such as IPMP information or right information is described in a session description protocol (SDP) of the session layer.

The session description protocol (SDP) will be described below. The session description protocol (SDP) is a format which does not include a transfer protocol and which is dedicated to session description. The session description protocol is set on the assumption that various transfer protocols such as a session announcement protocol (SAP), a session initiation protocol (SIP), a real-time streaming protocol (RTSP), an electronic mail using MIME extension, and a hypertext transfer protocol (HTTP) are appropriately used. Providing general-purpose service, the system is available in a wide network environment and for a multimedia streaming transmission application.

In general, the SDP is a means which makes it know that a session is present and stores enough information to participate in the session. Some information such as media information, timing information, or other information are described in the SDP and can be distributed by another transfer protocol.

The session description is constituted by a session level description (adapted to the entire session and all the media streams) and several arbitrary media level descriptions (adapted to a single media stream). A session level part is started from a row "v=" and connected to a first media level section. The media description is started from a row "m=" and connected to the end of the entire session description. In general, a session level value is a default value with respect to all media unless the session level value is overwritten with a value at the same media level.

An attribute (having a row "a=") regulated in the SDP is a main means which extends the SDP. This attribute can be used as a "session level" attribute, a "media level" attribute, or both of them. The media description may include media specific attributes ("a=" field) the number of which is not limited.

These attributes are called "media level" attributes to add information associated with a media stream. An attribute field may be added in front of a first media field. On the other hand, the "session level" attribute stores additional information which is adapted to the entire streaming layer but respective media.

In the method of transmitting a media stream according to the present invention, adaptive IPMP protection is announced by using the characteristics of SDP "attributes" in different levels of two types. FIG. 4 is a general architecture diagram of an adaptive IPMP announcement in the SDP. A session level section is shown in module 4.1, and a media level section is shown in module 4.2.

Note: A format of "a = <attribute>:<value>" in the "attribute" field is used in the adaptive IPMP announcement.

IPMP Control Information Announcement

A sender must announce that an IPMP control information session is included in a general SDP attribute (attribute arranged in front of a row "media" in a session level) to a receiver. This announcement has a format of the following attribute row (4.3 in FIG. 4).

$$a = ipmp - control: [<control-data>]$$

In this case, control-data means an arbitrary attribute in the RTSP session. When the attribute row is not provided, DESCRIBE is used together with a type of application/ipmp-control, and the former is accepted to read IPMP control information through the RTSP session. When SDP information is provided by any other means (for example, as a file in the SAP), control-data is necessary. The control-data must be a URL sandwiched by double quotation marks and provides IPMP control information (for example, small information can be encoded by using "data" and other information can be encoded by using "http" or another appropriate file access URL). Actual IPMP control information is regulated by the following sub-sections and includes an IPMP tool list and a right container subsequent to the IPMP tool list.

IPMP Tool List Class

An IPMP tool list class includes a list of IPMP tools. By using the list, all IPMP tools used in reproduction of contents are designated.

[Table 1]

| Syntax | Bit Rate | Mnemonic Code |
|---|---|---|
| IPMPToolList(){ | | |
|     Length | 16 | uimsbf |
|     NumTools | 8 | uimsbf |
|     for (i = 0; i < numTools; i++){ | | |
|         IPMPTool_Info() | | |
|     } | | |
| } | | |

Meaning of Field in IPMP Tool List Class

- Length: The number of bytes of the class started immediately after the "Length" field.
- NumTools: The 16-bit field indicates the number of types of tools designed by the IPMP tool list class.

- IPMPTool_Info: The class stores information associated with tools such as a tool ID and an alternative tool. This information is regulated as follows.

IPMP Tool Information Class

IPMPTool_Info_Class includes information for a logic IPMP tool necessary for a device. The logic tool may be any one of the following tools.

1. Vender specific IPMP tool designated by IPMP_ToolID,
2. one in a list of alternative tools, and
3. an IPMP tool designated by a parameter description.

[Table 2]

| Syntax | Bit Rate | Mnemonic Code |
|---|---|---|
| IPMPTool_Info(){ | | |
|    Length | 16 | uimsbf |
|    IPMP_ToolID | 128 | uimsbf |
|    isAltGroup | 1 | uimsbf |
|    isParametric | 1 | uimsbf |
|    Reserved (0b111111) | 6 | uimsbf |
|    if (isAltGroup){ | | |
|       NumAlternatives | 8 | uimsbf |
|       for (i =0; i < numAlternatives; i++){ | | |
|          Specific_Tool_ID | | |
|       } | 128 | uimsbf |
|    } | | |
|    if (isParametric) { | | |
|       IPMP_ParametricDescription | | |
|    } | | |
|    numURLs | | |
|    ToolURL [numURLS] | | |
| } | 8 | uimsbf ByteArray |

Semantic Definition of Field in IPMP Tool Information Class

Each IPMPTool_Info_Class identifies one IPMP tool necessary when a terminal use contents. This tool is uniquely mounted as one of the list of alternative tools or can be designated by a parameter description.

A unique mounting scheme is designated by setting both fields of isAltGroup and isParametric at zero. In this case, the IPMP_ToolID is present in a reserved region for mounting specific to the IPMP tool, and directly designates a required tool.

In all the other cases, since an actual IPMP tool ID of the IPMP tool is not known when contents are formed, the IPMP_toolID functions as an abstracted expression specific to contents for the IPMP tool ID and depends on a mounting form on a terminal side of a given contents part at a given point of time.

The parameter description is designated by setting the isParametric field as "1". In this case, a terminal selects an IPMP tool which satisfies a reference designated by the following parameter description. In this case, the IPMP_ToolID is present in a region reserved for a parameter tool or an alternative tool. An actual IPMP tool ID of a tool selected by a terminal package to satisfy the parameter description is known by only the terminal. All the contents and other tools refer to the tool for the corresponding contents through the designated IPMP_ToolID.

A list of alternative tools is designated by setting an isAltGroup flag at "1". The subsequent specific tool ID designates an alternative tool equivalent to the corresponding tool. When an isParametric field is set at "1 ", arbitrary tools selected under the conditions (described in the above paragraph) of a parameter tool are regarded by the terminal as other equivalent alternative objects of the tool designated through a specific tool ID. The terminal selects one of these equivalent alternative objects by a decision made by the terminal. An actual tool ID of the tool is known by only the terminal.

- Length: The number of bytes started immediately after the "Length" field.
- IPMP_ToolID: Identifier of an IPMP tool.
- isAltGroup: When "1" is set, the IPMP_Tool includes a list of alternative IPMP tools.
- numAlterates: The number of alternative IPMP tools designated by IPMP_Tool.
- Specific_Tool_ID: An array of IDs of specific alternative IPMP tools which are allowed to use contents.
- isParametric: IPMP_Tool includes a parameter description of an IPMP tool. In this case, IPMP_ToolID is an identifier for an IPMP tool described by parameters. The terminal transfers information designated by an IPMP_ToolID bit stream to a specific IPMP tool instance-generated by the terminal.
- IPMP_ParametricDescription: An IPMP parameter description regulated by the following section.
- ToolURL: An array of URLs which can acquires at least one tool designed by the class, which includes information, and the number of which is equal to the number of numURLs.

IPMP Parameter Description Class

A contents provider uses a parameter description in place of a fixed tool ID to be able to describe a type of an IPMP tool necessary for reproduction of contents. For example, the contents provider can designate an AES tool which requires a block size of 128 bits to decode a video stream. When the IPMP terminal receives such a description to designate the tool, an optimized AES tool can be selected from embedded tools.

In this section, a level to which a parameter description conform will be explained. However, a specific scheme will be not intended to be regulated for a specific tool type. With a lapse of time, as needs are recognized to generate an optimum scheme, it is assumed that the regulation is added to the entire scheme. Only a basic framework is described in a current version of the specification, a developed specification depends on a future supplement and/or version.

- Arbitrary comment
- Version of parameter description syntax
- Class of tool
- Example: Decoding, right language parser
- Sub-class of tool

     Example of decoding: AES, DES, NESSIE, and the like
     Example of watermark: "Watermark tool of Panos"
     Example of right language parser: "Right parser of Fred"
     Example of protocol parser: "Protocol parser of Mary"

- Sub-class specific information

     Example of DES: Bit rate, stream, and/or block resolving power
     Example of right language parser: version

The parameter description is regulated regardless of the type of a tool such that an IPMP tool of an arbitrary type can be generally described.

[Table 3]

| Syntax | Bit Rate | Mnemonic Code |
|---|---|---|
| IPMP_ParametricDescription(){<br>    Length<br>    descriptionComment<br>    majorVersion<br>    minorVersion<br>    numOfDescriptions<br>    for (i = 0; i < numOfDescriptions; i++){<br>        class<br>        subClass<br>        typeData<br>        type<br>        addedData<br>    }<br>} | <br><br>16<br><br>8<br>8<br>8 | <br><br>uimsbf<br>ByteArray<br>uimsbf<br>uimsbf<br>uimsbf<br><br><br><br>ByteArray<br>ByteArray<br>ByteArray<br>ByteArray<br>ByteArray |

Meaning of Field in IPMP Tool Information Class

- class: A class of a tool described by parameters (for example, decoding).
- subClass: A sub-class (for example, AES under the decoding class) of a tool described by parameters.
- typeData: Data of a specific type to describe a tool of a specific type to further designate an AES decoding tool (for example Block_length).
- type: a Value (for example, 128 in case of Block_length) of the data of the above type.
- addedData: Arbitrary additional data useful to more closely describe a tool regulated by parameters.

IPMP Tool ID

An IPMP tool identifier has a length of 128 bits, is independent of a platform, and includes an unique identification number for an IPMP tool. In order to use the IPMP tool identifier, a registration organization for IPMP tools using unique IDs is necessary (the registration organization is regulated by MPEG). The registration organization also operates association among download URLs to implement given tools oriented to various platforms by various methods. These platforms are sufficiently closely described by using a structuring expression. The IPMP tool ID identifies a specific IPMP tool except for a case in which a tool described by parameters or an alternative tool is present in a reserved region. Specific values in a 128-bit space are reserved for a parameter tool, a bit stream, a terminal, and another special address. These values are not allocated to registered tools.

[Table 4]

| IPMP_ToolID | Meaning |
|---|---|
| 0x0000 | Prohibition of Use |
| 0x0001 | Contents |
| 0x0002 | Terminal |
| 0x0003-0x2000 | Reserved for use in ISO |
| 0x2001-0xFFFF | Carrying-over from 14496-1 RA |
| 0x10000-0x100FF | Parameter Description Tool or Alternative Tool |
| 0x100FF-2^128-2 | Free Region for Registration |

(continued)

| IPMP_ToolID | Meaning |
|---|---|
| 2^128-1 | Prohibition of Use |

IPMP Right Container Class

An IPMP right container class stores a use rule and a state associated with contents protected by IPMP.

[Table 5]

| Syntax | Bit Rate | Mnemonic Code |
|---|---|---|
| IPMP_Rights_Container(){<br>    Length<br>    rights_data<br>} | 16 | uimsbf<br>ByteArray |

Semantic Definition of Field in IPMP Right Container Class

- Length: The number of bytes of the class started immediately after the "Length" field.
- rights_data: Including detail of use right information. Actual MPEG-21 REL or OMA ODRL data can be stored.

Announcement of IPMP Descriptor

It must be announced to a sender or a receiver by respective specific media streams (attributes in a media level) or an SDP attribute associated with an entire session that an IPMP specific descriptor is included. This employs a format of the following attribute row (4.4 in FIG. 4).

a = ipmp-d: [<descriptor-data>]

In this case, the descriptor-data is an arbitrary attribute in an RTSP session. When the attribute row is not provided, DESCRIBE is used together with the type of application/ipmp-d, and an IPMP descriptor is read through an RTSP session by accepting the former. When SDP information is provided as any other means (as a file in an SAP), the description-data is necessary. The description-data must be a URL sandwiched by double quotation marks and provides IPMP control information (for example, small information can be encoded by using "data" and other information can be encoded by using "http" or another appropriate file access URL). The actual IPMP descriptor is regulated by the following sub-sections.

The presence of the IPMP descriptor shows that an associated media stream is protected by an IPMP tool described in the IPMP descriptor.

The presence of the IPMP descriptor at a session level shows that all media streams in a current session are protected by an IPMP tool described in the IPMP descriptor.

IPMP Descriptor

[Table 6]

| Syntax | Bit Rate | Mnemonic Code |
|---|---|---|
| IPMP_descriptor(){ | | |
|     descriptor_tag | 8 | Uimsbf |
|     descriptor_length | 8 | Uimsbf |
|     IPMP_Descriptor_ID | 32 | Uimsbf |
|     IPMP_ToolID | 128 | Uimsbf |
|     ControlPoint | 8 | uimsbf |
|     SequenceCode | 8 | uimsbf |
|     IPMP_Data_length | 16 | uimsbf |
|       for (i = 0; I< N; i++){ | | |
|         IPMP_Data | | |
|       } | | |
|     IsSigned | 8 | Uimsbf |
|     if (isSigned) | | |
|       Signature | | |
|       NumCerts | 8 | ByteArray |
|       for (i = 0; i< numCerts ; i++){ | | uimsbf |
|         CertType | | |
|         Certificate | 8 | uimsbf |
|       } | | ByteArray |
|       Verfying_Tool_ID | | |
|     } | 128 | |
| } | | uimsbf |

Semantic Definition of Field in IPMP Descriptor

- IPMP_Descriptor_ID: The unique ID of the IPMP descriptor. A specific descriptor can be referred to by using this ID. Addresses 0x00000000 and 0xFFFFFFFF are prohibited from being used. Since instantiation of an IPMP tool is announced by the unique IPMP descriptor, the IPMP_Descriptor_ID can also be used as a unique identifier of IPMP tool instance for a message.
- IPMP_ToolID: The unique ID of an IPMP tool which provides protection in the range.
- controlPoint: A value which designates an IPMP control point where the IPMP tool is present and which is one selected from the following values.

Terms $TB_n$, $B_n$, $EB_n$, and $D_n$ are defined by an STD model of MPEG-2 system ISO/IEC13818-1.

[Table 7]

| Control Point | Description |
|---|---|
| 0x00 | Uncontrolled Point |
| 0x01 | Control Point After Transfer Buffer |
| 0x02 | Control Point between Decoding Buffer and Decoder |
| 0x03 | Control Point between Decoder and Rendering |
| 0x04~0xDD | Reserved |
| 0xDE~0xFE | Exclusive Use of User |

(continued)

| Control Point | Description |
|---|---|
| 0xFF | Prohibition of Use |

- sequenceCode: A value which designates a relationship between an IPMP tool and an IPMP tool (group) which is presents at the same control point of the IPMP tool. The value in the field designates a degree of priority of the IPMP tool at a specific control point. For example, a value "20" means that the tool has a degree of priority higher than that of an IPMP tool having a sequenceCode of "12". The date is transmitted to an IPMP tool having a high degree of priority first. Thereafter, the data is transmitted to an IPMP tool having the next higher degree of priority. Two tools do not have the same sequence numbers at the same control point in the same stream.
- IPMP_Data: IPMP data extended from IPMP_Data_baseClass according to the regulation of ISO13818-11. The IPMP data includes , but are not limited to, IPMP right data, IPMP key data, tool structure data, and the like.
- isSigned: The 1-bit field shows that a signature is present in an IPMP descriptor.
- Signature: A signature of the entire IPMP descriptor.
- CertType: A type of a certification organization in use. The value of the type is given by a registration organization.
- NumCerts: The number of certifications.
- Certificate: An array of certifications
- Verifying_Tool_ID: An ID of a tool required to verify a certification (group). A value "0" indicates a device.

Embodiment

The following is an example of adaptive IPMP protection announcement. The adaptive IPMP protection announcement is stored in an SDP session of a session layer.

Client Request for FGP Bit Stream

(C->S indicates an RTSP message to be transmitted from a client to a server, and S->C indicates an RTSP message to be transmitted from the server to the client.)

The above example indicates that a client on a receiver must read IPMP control information (IPMP tool list and right information) from an HTTP site (http://aaa.com/ipmp) expressed in a session level attribute of an SDP declaration. At a media session level, a video stream in an FGS base layer is not protected, but an extended layer video is protected by one IPMP tool. The description of the tool is stored in the IPMP descriptor and encoded by Base64 which is further declared in an SDP second media attribute.

In the present invention, an IPMP tool list and a right container in session level attributes of an SDP and an IPMP descriptor are used in any one of a media level attribute and a session level attribute of the SDP to announce adaptive IPMP protection together with right information oriented to streaming contents.

In this manner, the following points are realized.

1) By using an IPMP tool list in a session level attribute "IPMP-Control", a user participates in an entire session to show an IPMP tool required to reproduce all media streams.
2) An IPMP right container in the session level attribute "IPMP-Control" is used to show a use right associated with the entire session.
3) An IPMP descriptor in a media level or session level attribute "IPMP-D" is used to show a specific media stream protected by a specific IPMP tool.
4) Tool structure data, use right information at a specific media level, and key data in an IPMP_Data field of the IPMP descriptor are transmitted.

SDP attributes of "ipmp-control" and "ipmp-d" regulated in the present invention can completely realize adaptive IPMP announcement. Therefore, an adaptive IPMP framework the security of which is assured can be implemented on the basis of described terms in ISO/IEC 13818-11 or ISO/IEC 14496-13

(MPEG-2/4 IPMP extension).

The present invention can employ the following configurations described in various embodiments. According to first configuration, a device which announces adaptive IPMP protection on a server side, includes:

generating an IPMP tool list to show a list of IPMP tools required by a client to process a media stream in a session; and incorporating the IPMP tool list in an SDP session level attribute to carry the IPMP tool list to a receiver before the media stream is started.

According to second configuration, a device which announces adaptive IPMP protection on a server side, an IPMP tool list being constituted and stored according to the first configuration, further includes:

constituting an IPMP descriptor showing a tool used in protection of a media stream and arbitrarily storing a tool structure or IPMP data of another type in the IPMP descriptor; and
incorporating the IPMP descriptor in an SDP session level attribute to announce to a receiver that all media streams in a current session are managed by an IPMP tool described in the IPMP descriptor.

According to third configuration, a device which announces adaptive IPMP protection on a server side, an IPMP tool list being constituted and stored according to the first configuration, further includes:

constituting an IPMP descriptor showing a tool used in protection of a media stream and arbitrarily storing a tool structure or IPMP data of another type in the IPMP descriptor; and
incorporating the IPMP descriptor in an SDP media level attribute to announce to a receiver that associated media streams are managed by an IPMP tool described in the IPMP descriptor.

According to fourth configuration, a device which announces adaptive IPMP protection on a server side, includes:

storing use right information in an IPMP right container; and
storing the IPMP right container in a session level attribute to show that all media streams in a current session are managed by described contracts of use.

According to fifth configuration, a device which announces adaptive IPMP protection on a server side, includes:

storing use right information in an IPMP right data;
storing the IPMP right data in an IPMP descriptor as one type of IPMP data; and
storing the IPMP descriptor in a session level attribute to show that all media streams in a current session are managed by described contracts of use.

According to sixth configuration, a device which announces adaptive IPMP protection on a server side, includes:

storing use right information in an IPMP right data;
storing the IPMP right data in an IPMP descriptor as one type of IPMP data; and
storing the IPMP descriptor in an SDP media level attribute to show that associated media streams are managed by described contracts of use.

According to seventh configuration, a device which announces adaptive IPMP protection on a client side, includes:

receiving the IPMP tool list from the SDP session level attribute before a media stream is stated;
checking a shown tool in the tool list to confirm that all the tools are present on a receiver, and reading a tool or stopping reproduction of the media stream in the absence of all the tools.

According to eighth configuration, a device which announces adaptive IPMP protection on a client side, an IPMP tool list being read according to the seventh configuration, further includes:

reading the IPMP descriptor from an SDP session level attribute to announce to a client that all media streams in a current session are managed by an IPMP tool described in the IPMP descriptor; and
arbitrarily setting or initializing a tool by using tool structure data stored in the IPMP descriptor or supporting an IPMP process by using data of another type stored in the IPMP descriptor.

According to ninth configuration, a device which announces adaptive IPMP protection on a client side, an IPMP tool list being read according to the seventh configuration, further includes:

reading the IPMP descriptor from an SDP session level attribute to announce to a client that associated media streams are managed by an IPMP tool described in the IPMP descriptor; and

arbitrarily setting or initializing a tool by using tool structure data stored in the IPMP descriptor or supporting an IPMP process by using data of another type stored in the IPMP descriptor.

According to tenth configuration, a device which announces adaptive IPMP protection on a client side, includes:

reading an IPMP right container from an SDP session level attribute;

reading use right information in the IPMP right container; and

managing all media streams in a current session by using the use right information.

According to eleventh configuration, a device which announces adaptive IPMP protection on a client side, includes:

reading an IPMP descriptor from an SDP session level attribute;

reading use right data from the IPMP descriptor;

reading use right information in the IPMP right data; and

managing all media streams in a current session by using the use right information.

According to twelfth configuration, a device which announces adaptive IPMP protection on a client side, includes:

reading an IPMP descriptor from an SDP session level attribute;

reading use right data from the IPMP descriptor;

reading use right information in the IPMP right data; and

managing associated media streams in a current session by using the use right information.

As described above, the present invention is explained in detail by the preferable embodiments. However, the present invention is not limited to the embodiments. It will be apparent to persons skilled in the art that many preferable modification and changes within the spirit and scope of the invention described in the following scope of claims.

**Claims**

1. A streaming system comprising a server which transmits a media stream having a layer structure including at least a session layer through a network and a client which receives the media stream from the server through the network, the server comprising:

a storing unit operable to store management information for managing the media stream in a session description protocol of the session layer of the media stream; and

a transmitting unit operable to transmit the session description protocol in which the management information is stored to the client in the session layer of the media stream, and the client comprising:

a receiving unit operable to receive the session description protocol in which the management information is stored from the server;

an extracting unit operable to extract the management information from the received session description protocol; and

a managing unit operable to manage the media stream on the basis of the extracted management information.

2. The streaming system according to claim 1, wherein the management information is an IPMP tool list or an IPMP descriptor related to an IPMP tool used in the protection of the media stream, and the managing unit specifies the IPMP tool by the extracted IPMP tool list or the IPMP descriptor to manage the media stream.

3. The streaming system according to claim 1, wherein the management information is right information of the media stream.

**4.** The streaming system according to any one of claims 1 to 3, wherein the management information is stored in a session level attribute related to all media streams in the same session of the session description protocol.

**5.** The streaming system according to any one of claims 1 to 3, wherein the management information is stored in a media level attribute related to associated media streams in the session description protocol.

**6.** A server which transmits a media stream having a layer structure including at least a session layer to a client through a network, comprising:

a storing unit operable to store management information for managing the media stream in a session description protocol of the session layer of the media stream; and
a transmitting unit operable to transmit the session description protocol in which the management information is stored to the client in the session layer of the media stream.

**7.** The server according to claim 6, wherein the management information is an IPMP tool list or an IPMP descriptor related to an IPMP tool used in protection of the media stream.

**8.** The server according to claim 6, wherein the management information is right information of the media stream.

**9.** The server according to any one of claims 6 to 8, wherein the management information is stored in a session level attribute related to all media streams in the same session of the session description protocol.

**10.** The server according to any one of claims 6 to 8, wherein the management information is stored in a media level attribute related to associated media streams in the session description protocol.

**11.** A client which receives a media stream having a layer structure including at least a session layer from a server through a network, comprising:

a receiving unit operable to receive a session description protocol in which management information for managing the media stream is stored from the server;
an extracting unit operable to extract the management information from the received session description protocol; and
a managing unit operable to manage the media stream on the basis of the extracted management information.

**12.** The client according to claim 11, wherein the management information is an IPMP tool list or an IPMP descriptor related to an IPMP tool used in protection of the media stream, and the managing unit specifies an IPMP tool used in protection of the media stream by the extracted IPMP tool list or the IPMP descriptor to manage the media stream.

**13.** The client according to claim 11, wherein the management information is right information of the media stream.

**14.** The client according to any one of claims 11 to 13, wherein the management information is stored in a session level attribute related to all media streams in the same session of the session description protocol.

**15.** The client according to any one of claims 11 to 13, wherein the management information is stored in a media level attribute related to associated media streams in the session description protocol.

**16.** A transmitting method which transmits a media stream having a layer structure including at least session layer to a client through a network, comprising:

> storing management information for managing the media stream in a session description protocol of the session layer of the media stream; and
> transmitting the session description protocol in which the management information is stored to the client in the session layer of the media stream.

17. The transmitting method according to claim 16, wherein
the management information is an IPMP tool list or an IPMP descriptor related to an IPMP tool used in protection of the media stream.

18. The transmitting method according to claim 16, wherein
the management information is right information of the media stream.

19. The transmitting method according to any one of claims 16 to 18, wherein
the management information is stored in a session level attribute related to all media streams in the same session of the session description protocol.

20. The transmitting method according to any one of claims 16 to 18, wherein
the management information is stored in a media level attribute related to associated media streams in the session description protocol.

21. A transmitting program which is designed such that the transmitting method according to any one of claims 16 to 20 can be executed by a computer.

22. A computer readable recording medium in which the transmitting program according to claim 21 is stored.

23. A receiving method which receives a media stream having a layer structure including at least session layer from a server through a network, comprising:

> receiving a session description protocol in which management information for managing the media stream is stored from the server;
> extracting the management information from the received session description protocol; and
> managing the media stream on the basis of the extracted management information.

24. The receiving method according to claim 23, wherein
the management information is an IPMP tool list or an IPMP descriptor related to an IPMP tool of the media stream, and in the course of the step of managing the media stream of the client, specifying an IPMP tool used in the protection of the media stream by the extracted IPMP tool list or the IPMP descriptor to manage the media stream.

25. The receiving method according to claim 23, wherein
the management information is right information of the media stream.

26. The receiving method according to any one of claims 23 to 25, wherein
the management information is stored in a session level attribute related to all media streams in the same session of the session description protocol.

27. The receiving method according to any one of claims 23 to 25, wherein
the management information is stored in a media level attribute related to associated media streams in the session description protocol.

28. The receiving program which is designed such that the receiving method according to any one of claims 23 to 27 can be executed by a computer.

29. A computer readable recording medium in which the receiving program according to claim 28 is stored.

30. A media stream transmitted and received from a server to a client through a network and having a layer structure including at least a session layer, wherein

management information for managing the media stream is stored in a session description protocol of the session layer.

# Fig.1

```
+--------------------------------------------------------+
|                                                        |
|   +-----------+                     +-----------+      |
|   |           |                     |    KEY    |      |
|   | MASTERING | <===============>   |  LICENSE  |      |
|   |           |                     |MANAGEMENT |      |
|   +-----------+                     +-----------+      |
|        ||                                 |            |
|     ISMACryp                             KEY           |
|        ||                                 |            |
|        V                                  V            |
|   +-----------+                     +-----------+      |
|   |           |  <===RTSP/SDP==>    |   ISMA    |      |
|   |  SENDER   |                     |           |      |
|   |           |  ===ISMACryp==>     | RECEIVER  |      |
|   +-----------+                     +-----------+      |
|                                                        |
|   +---LEGEND-------------+                             |
|   | ==> ISMA DRM SCOPE   |                             |
|   | (OPTIONAL STREAM)    |                             |
|   +---------------------+                              |
|                                                        |
+--------------------------------------------------------+
```

## Fig.2

PSI
- IPMP CONTROL INFORMATION
- PAT
- PMT
- ......

2.1

- IPMP TOOL LIST
- IPMP TOOL CONTAINER
- IPMP RIGHT CONTAINER

2.2

- TOOL ID
- PARAMETER DESCRIPTION
- ALTERNATIVE TOOL ID
- REFERENCE INFORMATION URL

USE RIGHT

2.3

IPMP DESCRIPTOR

IPMP CONTROL GRAPH

PROGRAM 1    PROGRAM 2
......

ES  1    ES  2
......

TOOL    CONTROL    IPMP    ......
ID      POINT      DATA

MPEG-2 CONTENTS PROTECTED BY IPMP

CONTENTS STREAM
- IPMP STREAM
- AUDIO ES
- VIDEO ES
- ......

IPMP DATA

VARIOUS IPMP DATA
- OPAQUE DATA
- KEY DATA
- RIGHT DATA
- TOOL INITIALIZING DATA
- ......

EP 1 694 067 A1

*Fig.3*

**IOD** (3.1)
- IPMP TOOL LIST
- IPMP TOOL ESD
- IPMP DESCRIPTOR
- ......

**IPMP TOOL LIST**
- TOOL ID
- PARAMETER DESCRIPTION
- ALTERNATIVE TOOL ID
- REFERENCE INFORMATION URL

**IPMP DESCRIPTOR** (3.3)

**IPMP CONTROL GRAPH**
- OD A
- OD B
- ES 1
- ES 2
- TOOL CONTROL POINT ID
- IPMP CONTROL POINT
- TOOL ID
- IPMP DATA

**CONTENTS STREAM**
- OD STREAM
- IPMP STREAM
- MPEG-4 CONTENTS STREAM
- ......

**IPMP DATA**

**VARIOUS IPMP DATA**
- OPAQUE DATA
- KEY DATA
- RIGHT DATA
- TOOL INITIALIZING DATA
- ......

# Fig.4

SESSION DESCRIPTION                4.1

SESSION LEVEL SECTION

v= (protocol version)
o= ...
s= ...
e= ...
c= ...
t= ...

Attribute declaration                4.3
a=control:*
a=range:ntp=...
a=ipmp-control: [<control-data>]

IPMP Tool List

Rights Container

MEDIA LEVEL SECTION                4.2

m= video (media name and transport address)
i= ...
b= ...

Attribute declaration                4.4
a=rtpmtp:...
a=ftmp:...
a=ipmp-d: [<description-data>]

IPMP Descriptor (1)

m= video (media name and transport address)
i= ...
b= ...

Attribute declaration
a=rtpmtp:...
a=ftmp:...
a=ipmp-d: [<description-data>]

IPMP Descriptor (2)

## Fig.5

SERVER                                                    CLIENT

|   | 41 | 42 | 43 |
|---|---|---|---|
| 40 | MPEG-4 Video | Audio | |
| 30 | MPEG-4 System | | |
| 20 | RTSP (SDP) | 31 32 | |
| 10 | IP | | |

## Fig.6

SERVER                                                    CLIENT

|   | 41 | 42 | 43 |
|---|---|---|---|
| 40 | MPEG-4 Video | Audio | |
| 20 | RTSP (SDP) | | |
| 10 | IP | 21 22 | |

# Fig.7

```
         ┌─────────────┐
         │    START    │
         └──────┬──────┘
                │
┌──────┬────────────────────────────┐
│      │ INCORPORATE IPMP TOOL LIST OR IPMP │
│ S01  │   DESCRIPTOR IN SDP OF SESSION    │
│      │      LAYER OF MEDIA STREAM         │
└──────┴────────────────────────────┘
                │
┌──────┬────────────────────────────┐
│      │ TRANSMIT SDP INCLUDING IPMP TOOL  │
│ S02  │ LIST OR IPMP DESCRIPTOR TO CLIENT BY │
│      │  SESSION LAYER OF MEDIA STREAM    │
└──────┴────────────────────────────┘
                │
┌──────┬────────────────────────────┐
│      │  TRANSMIT MPEG-4 VIDEO/AUDIO      │
│ S03  │  CONTENTS TO CLIENT IN CONTENTS   │
│      │      LAYER OF MEDIA STREAM        │
└──────┴────────────────────────────┘
                │
         ┌─────────────┐
         │     END     │
         └─────────────┘
```

## Fig.8

```
           ┌─────────────┐
           │    START    │
           └──────┬──────┘
                  │
    ┌─────────────┴──────────────────────┐
S11 │ RECEIVE SDP INCLUDING IPMP TOOL     │
    │ LIST OR IPMP DESCRIPTOR FROM SERVER │
    │ IN SESSION LAYER OF MEDIA STREAM    │
    └─────────────┬──────────────────────┘
                  │
    ┌─────────────┴──────────────────────┐
S12 │      RECEIVE MPEG-4 VIDEO/AUDIO     │
    │    CONTENTS FROM SERVER IN CONTENTS │
    │        LAYER OF MEDIA STREAM        │
    └─────────────┬──────────────────────┘
                  │
    ┌─────────────┴──────────────────────┐
S13 │   EXTRACT IPMP TOOL LIST OR IPMP    │
    │    DESCRIPTOR FROM RECEIVED SDP     │
    └─────────────┬──────────────────────┘
                  │
    ┌─────────────┴──────────────────────┐
S14 │  SPECIFY IPMP TOOL ON THE BASIS OF  │
    │   THE EXTRACTED IPMP TOOL LIST OR   │
    │          IPMP DESCRIPTOR            │
    └─────────────┬──────────────────────┘
                  │
    ┌─────────────┴──────────────────────┐
S15 │    MANAGE MEDIA STREAM BY USING     │
    │         SPECIFIC IPMP TOOL          │
    └─────────────┬──────────────────────┘
                  │
           ┌──────┴──────┐
           │     END     │
           └─────────────┘
```

# Fig.9

START

| S21 | INCORPORATE RIGHT INFORMATION IN SDP OF SESSION LAYER OF MEDIA STREAM |

| S22 | TRANSMIT SDP INCLUDING RIGHT INFORMATION TO CLIENT IN SESSION LAYER OF MEDIA STREAM |

| S23 | TRANSMIT MPEG-4 VIDEO/AUDIO CONTENTS TO CLIENT IN CONTENTS LAYER OF MEDIA STREAM |

END

## Fig.10

```
┌──────────────┐
│    START     │
└──────────────┘
        │
┌───────────────────────────────────┐
│       RECEIVE SDP INCLUDING RIGHT │
S31     INFORMATION FROM SERVER IN SESSION
│         LAYER OF MEDIA STREAM     │
└───────────────────────────────────┘
        │
┌───────────────────────────────────┐
│      RECEIVE MPEG-4 VIDEO/AUDIO   │
S32     CONTENTS FROM SERVER IN CONTENTS
│          LAYER OF MEDIA STREAM    │
└───────────────────────────────────┘
        │
┌───────────────────────────────────┐
│       EXTRACT RIGHT INFORMATION FROM
S33              RECEIVED SDP        │
└───────────────────────────────────┘
        │
┌───────────────────────────────────┐
│      MANAGE MEDIA STREAM BY USING │
S34            EXTRACTED IPMP TOOL   │
└───────────────────────────────────┘
        │
┌──────────────┐
│     END      │
└──────────────┘
```

## INTERNATIONAL SEARCH REPORT

| International application No. |
|---|
| PCT/JP2004/017602 |

**A. CLASSIFICATION OF SUBJECT MATTER**
Int.Cl⁷ H04N7/16, G06F12/14, G06F15/00, H04L9/14

According to International Patent Classification (IPC) or to both national classification and IPC

**B. FIELDS SEARCHED**

Minimum documentation searched (classification system followed by classification symbols)
Int.Cl⁷ H04N7/16, G06F12/14, G06F13/00, G06F15/00, H04L9/14

Documentation searched other than minimum documentation to the extent that such documents are included in the fields searched
| Jitsuyo Shinan Koho | 1922–1996 | Jitsuyo Shinan Toroku Koho | 1996–2005 |
| Kokai Jitsuyo Shinan Koho | 1971–2005 | Toroku Jitsuyo Shinan Koho | 1994–2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br><br>A | WO 2003/055219 A2 (TELEFONAKTIEBOLAGET LM ERICSSON),<br>03 July, 2003 (03.07.03),<br>Full text; all drawings<br>& EP 1454493 A2    & JP 2005-513664 A | 1,3-5,6,<br>8-10,11,<br>13-15,16,<br>18-22,23,<br>25-30<br>2,7,12,17,24 |
| A | WO 2003/075576 A2 (MATSUSHITA ELECTRIC INDUSTRIAL CO., LTD.),<br>12 September, 2003 (12.09.03),<br>Full text; all drawings<br>& JP 2004-7452 A | 2,7,12,17,24 |

☒ Further documents are listed in the continuation of Box C.    ☐ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>20 May, 2005 (20.05.05) | Date of mailing of the international search report<br>07 June, 2005 (07.06.05) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

International application No.

PCT/JP2004/017602

C (Continuation). DOCUMENTS CONSIDERED TO BE RELEVANT

| Category* | Citation of document, with indication, where appropriate, of the relevant passages | Relevant to claim No. |
|---|---|---|
| E,A | JP 2004-364268 A (MATSUSHITA ELECTRIC INDUSTRIAL CO., LTD.), 24 December, 2004 (24.12.04), Full text; all drawings (Family: none) | 1-30 |
| E,A | JP 2004-364273 A (MATSUSHITA ELECTRIC INDUSTRIAL CO., LTD.), 24 December, 2004 (24.12.04), Full text; all drawings (Family: none) | 1-30 |

Form PCT/ISA/210 (continuation of second sheet) (January 2004)